# EUROPEAN PATENT SPECIFICATION

(11) **EP 2 149 510 B1**
(45) Date of publication and mention of the grant of the patent: **12.02.2014**
(21) Application number: 08721740.2
(22) Date of filing: 10.03.2008
(51) Int. Cl.: B65D 85/50, B65D 65/40, B65D 81/26, A23B 4/00

(54) **DRIP ABSORBENT SHEET**
ABSORBIERENDES FLÄCHENGEBILDE
FEUILLE D'EGOUTTAGE

(30) Priority: 19.04.2007 JP 2007110131
(43) Date of publication of application: 03.02.2010
(73) Proprietor: Uni-charm Corporation, Ehime 799-0111 (JP)
(72) Inventor: SHIBATA, Akira, Kanonji-shi Kagawa 769-1602 (JP)
(74) Representative: Murgatroyd, Susan Elizabeth
(86) International application number: PCT/JP2008/054324
(87) International publication number: WO 2008/132884

(56) References cited:
- EP-A2- 1 234 783
- WO-A2-2007/006272
- DE-U1- 20 200 661
- JP-A- 04 500 604
- JP-A- 2002 300 848
- JP-A- 2002 302 182
- JP-U- 04 135 321
- JP-U- 59 188 872
- JP-Y2- 52 022 533
- US-A- 5 022 945

## Description

### [TECHNICAL FIELD]

The present invention relates to a drip-absorbent sheet used for packing various kinds of foodstuff such as meat and fish.

### [BACKGROUND ART]

Recently various kinds of foodstuff, particularly meat and fish are often put into a tray made of resin and packed with plastic film to put it on sale or to transport it on a distribution process. In such cases, a liquid-absorbent sheet referring to also, for example, as drip-absorbent sheet or water-absorbent mat is often placed under the foodstuff or sandwiched between each pair of adjacent foodstuff layers to absorb an excessive amount of liquid (i.e., drip) oozing out from the foodstuff.

The inventors of the present patent application disclosed in PATENT CITATION 1 a drip-absorbent mat adapted to be placed under foodstuff from which an undesirably excessive amount of drip may ooze and comprising an absorbent sheet adapted to absorb such drip and a porous top-sheet overlying the absorbent sheet in contact with foodstuff. With such drip absorbent mat, the inventors disclosed also a process including a step of adjusting air-permeability in a plane direction and/or in a thickness direction of the absorbent sheet to prevent the underside of foodstuff in contact with the porous top-sheet from being discoloured. In PATENT CITATION 2, the inventors disclosed a drip-absorbent sheet adapted to absorb drip oozing out from foodstuff wherein the drip-absorbent sheet comprises an absorbent sheet containing synthetic fiber treated to become hydrophilic, a top layer of synthetic resin overlying the absorbent sheet and facing the foodstuff and a bottom layer of synthetic resin underlying the absorbent sheet wherein at least the top layer is formed with a plurality of channels adapted to guide liquid to the absorbent sheet.
[PATENT CITATION 1] JP 2002-302182 A (Claim 1, Fig. 5)
[PATENT CITATION 2] JP 2002-300848 A (Claim 1, Fig. 4)

WO-A-2007006272 and DE-U-20200661 each discloses an absorbent layer having an upper cover layer, a lower cover layer, and an absorption layer positioned between the upper and lower layers. At least one of the two cover layers has liquid-permeable openings through which liquid to be absorbed by the absorption layer passes. EP-A-1234783 discloses a drip absorption mat composed of an absorption sheet and a porous surface sheet arranged over the absorption sheet and in contact with food to improve breathability of the drip absorption mat. CITATION 1 is effective to protect foodstuff against discoloration, there is a possibility that any amount of drip might ooze through the underside of the drip-absorbent sheet since the underside of the absorbent sheet is not provided with a liquid-impervious sheet. In the case of the drip-absorbent sheet disclosed in PATENT CITATION 2, on the contrary, drip is guided through the channels from the top layer to the absorbent sheet so as to be quickly absorbed by the absorbent sheet and the bottom layer of synthetic resin underlying the absorbent sheet reliably prevents any amount of drip from leaking from the drip-absorbent sheet. However, the liquid guiding channels are created by stretching the top layer so as to extend into the absorbent sheet and the volume of the absorbent sheet was correspondingly reduced. In view of this, there has been need for improvement in the drip retaining capacity of the drip-absorbent sheet. In addition, since the liquid guiding channels are formed by thrusting and withdrawing needles through the drip-absorbent sheet, the bottom layer is apt to be deformed to close the channels again as the needles are withdrawn. Such deformation advantageously prevents any amount of drip from leaking out through the bottom layer but an efficiency of drip absorption through the bottom layer is significantly reduced.
In the case of WO-A-2007 006272, upon which the preamble of claim 1 is based, the upper and lower sheets allow the flow of liquid to the absorption sheet through openings at the bottom of depressions which are in contact with the absorption sheet.

In view of the problem left behind unsolved by the prior art as has been described above, it is a principal object of the present invention to provide a drip-absorbent sheet improved so that leak of drip may be effectively restricted, a volume of the absorbent sheet is not reduced, an amount of drip more than an absorption capacity of the absorbent sheet may be retained and drip absorption may be effectively achieved through both surfaces of the absorbent sheet.

### [MEASURE TO SOLVE THE PROBLEM]

The object set forth above is achieved, according to the present invention, by an improvement in a drip-absorbent sheet comprising; an absorbent sheet; a pair of thermoplastic sheets joined to both surfaces of said absorbent sheet and defining top and bottom surfaces of said drip-absorbent sheet, respectively, wherein said drip-absorbent sheet is adapted to be loaded with foodstuff onto said top surface; said thermoplastic sheets being formed with a plurality of openings spaced one from another; liquid guiding channels continuously extending from peripheral edges of respective said openings in a thickness direction of said thermoplastic sheets wherein each of said liquid guiding channels is diameter-reduced gradually as it extends toward a distal end thereof; and said thermoplastic sheets respectively face said top and bottom surfaces of said absorbent sheet being toward which said liquid guiding channels extend; said drip-absorbent sheet being characterized in that: said distal ends of said liquid guiding channels are respectively defined by saw teeth-like edges and joined to said absorbent sheet; said liquid guiding channels have drip retention spaces defined between said thermoplastic sheets and said drip-absorbent sheet; gaps are defined between said distal ends of said liquid guiding channels and said top and bottom surfaces of said absorbent sheet; said openings formed in the thermoplastic sheet defining the top surface do not overlap with the openings formed in the thermoplastic sheet defining the bottom surface as viewed in the thickness direction of the drip-absorbent sheet; and the maximum length measured from the peripheral edge of the opening to the distal end of the liquid guiding channel is larger than 1/2 of the maximum diameter of the opening.

According to one preferred embodiment, the thermoplastic sheets include at least 20 of the openings per 1cm².

According to another preferred embodiment, the thermoplastic sheets are made of polyethylene-based thermoplastic resin. According to further another preferred embodiment, the thermoplastic sheets are made of polyethylene-based thermoplastic resin containing 30% or higher by mass of at least one of low density polyethylene and ethylene copolymer and 70% or higher as measured together with the absorbent sheet.

### [EFFECT OF THE INVENTION]

The drip-absorbent sheet according to the present invention comprises the absorbent sheet and a pair of the thermoplastic sheets formed with a plurality of openings respectively joined to both surfaces of the absorbent sheet. With this unique construction, the thermoplastic sheets serve as barriers to restrict any amount of drip and at the same time allow drip to be absorbed through both surfaces. The liquid guiding channels do not extend into the absorbent sheet and therefore a volume of the absorbent sheet would not be reduced because of the liquid guiding channels. Furthermore, at the bottom surface of the absorbent sheet, the distal ends of the respective liquid guiding channels are joined to the absorbent sheet so as to form the retention spaces adapted to retain drip between the thermoplastic sheet and the absorbent sheet. In this way, the invention provides the drip-absorbent sheet adapted to retain drip exceeding the absorption capacity of the absorbent sheet.

The openings formed in the thermoplastic sheet defining the top surface do not overlap with the openings formed in the thermoplastic sheet defining the bottom surface, so that, even when a large amount of drip flows into the respective openings at once, passing of drip through the drip-absorbent sheet is effectively restricted.

The drip-absorbent sheet is dimensioned so that the maximum length of the liquid guiding channel measured from the peripheral edge to the distal end of the liquid guiding channel is larger than 1/2 of the maximum diameter of the opening, whereby the flow resistance acting on drip flowing through the liquid guiding channel becomes relatively high and the preventive effect against leak of drip is correspondingly improved.

With the drip-absorbent sheet in which the thermoplastic sheet includes 20 or more openings per 1cm², the diameter of the individual opening is correspondingly reduced and thereby alleviates a possibility that foodstuff such as meat might be marked by the respective openings. Polyethylene-based thermoplastic resin may be used to facilitate the thermoplastic sheet to be formed. Particularly, polyethylene-based thermoplastic resin containing high density polyethylene may be used to enhance stiffness of the liquid-guiding channel and to restrict the retention spaces from being collapsed under a load exerted on the drip-absorbent sheet.

According to the embodiment wherein the thermoplastic sheet is not colored and exhibits a total light transmittance of 70% or higher as measured together with the absorbent sheet, such high light transmittance of the thermoplastic sheet effectively obscure the presence of the drip-absorbent sheet sandwiched between foodstuff and the tray.

### [BRIEF DESCTIPTION OF THE DRAWINGS]

[FIG. 1] Fig. 1 is a partially cutaway perspective view of a drip-absorbent sheet.
[FIG. 2] Fig. 2 is a partially scale-engaged perspective view of a thermoplastic sheet.
[FIG. 3] Fig. 3 is a schematic sectional view of the drip-absorbent sheet taken along the line III-III in Fig. 1.
[FIG. 4] Fig. 4 is a diagram schematically illustrating a process of forming openings and liquid guiding channels.
[FIG. 5] Fig. 5 is a perspective view of a drum used to form the openings and the liquid guiding channels.

### [IDENTIFICATION OF REFERENCE NUMERALS USED IN THE DRAWINGS]

- 1: drip-absorbent sheet
- 2: absorbent sheet
- 3: thermoplastic sheet
- 4: openings
- 5: liquid guiding channels
- 6: peripheral edges
- 7: distal ends
- 8: retaining spaces
- 11: top surface
- 12: bottom surface
- 13: surface toward which said liquid guiding channels extend
- L: the maximum length
- D: the maximum diameter of opening

### [DETAILED DESCRIPTION OF THE PREFERRED EMBODIMENTS]

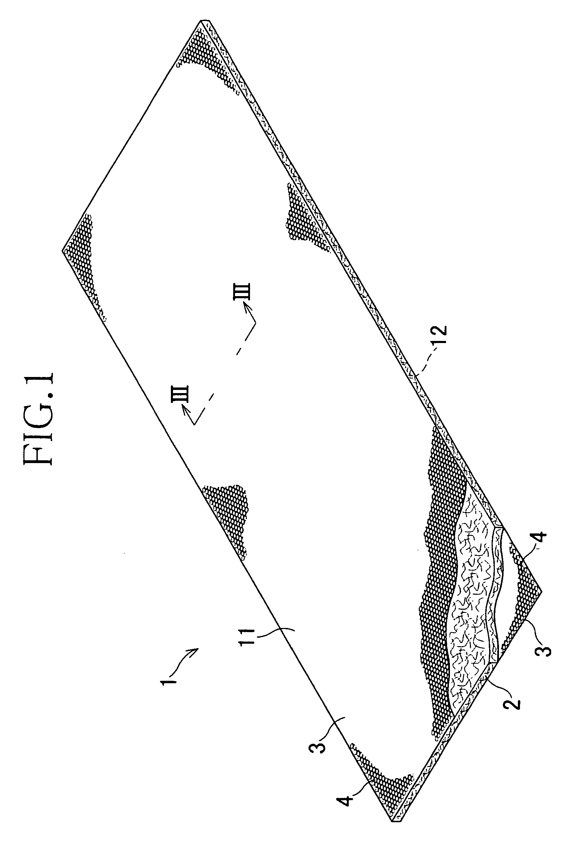

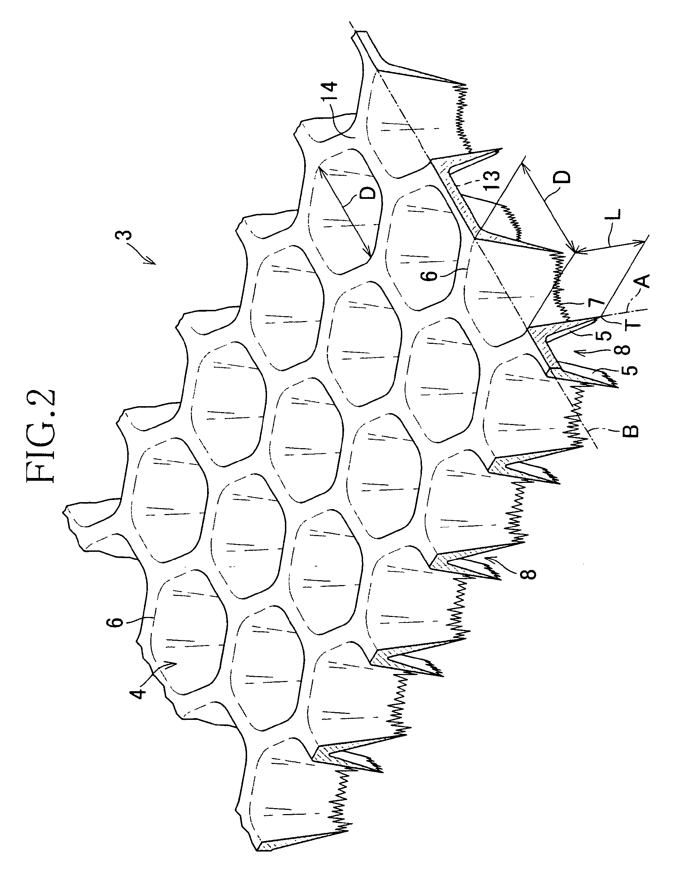

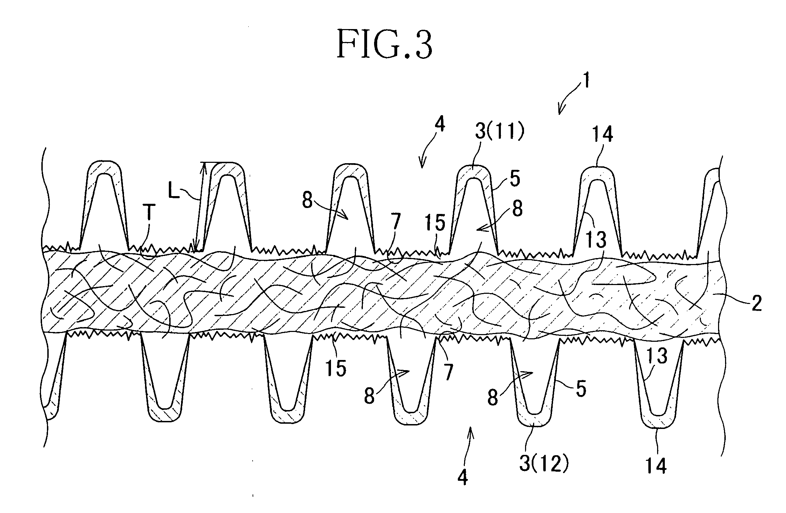

Details of the drip-absorbent sheet 1 according to the present invention will be more fully understood from the following description made in reference to the accompanying drawings. Fig. 1 is a partially cutaway perspective view of a drip-absorbent sheet 1, Fig. 2 is a partially scale-engaged perspective view of a thermoplastic sheet 3 bonded to the drip-absorbent sheet 1 and Fig. 3 is a schematic sectional view of the drip-absorbent sheet 1 taken along the line III-III in Fig. 1.

As shown by Fig. 1, the drip-absorbent sheet 1 comprises an absorbent sheet 2 and a pair of thermoplastic sheets 3 each being same as the absorbent sheet 2 in shape as well as in size and respectively bonded to both surfaces of the absorbent sheet 2 defining a top surface 11 and a bottom surface 12, respectively. The drip-absorbent sheet is adapted to be loaded foodstuff (not shown) onto the top surface 11. The respective thermoplastic sheets 3 are formed with a plurality of openings 4 having substantially uniform shapes arranged in zigzag pattern. It should be appreciated that the thermoplastic sheets defining the top surface 11 and the bottom surface 12, respectively, will sometimes be referred to as a top-sheet 16 and a back-sheet 17 in the following description.

The amount of drip once absorbed by the absorbent sheet 2 of the drip-absorbent sheet 1 is restricted by the top-sheet 16 and the back-sheet 17 serving as barriers from leaking out. Both the top- and back-sheets 16, 17 are provided with the openings 4 allowing drip to be absorbed not only through the top-sheet 16 on which the foodstuff is placed but also through the back-sheet 17. Consequentially, even if any amount of drip spills out from the drip-absorbent sheet 1 and infiltrates into a gap between a tray and the drip-absorbent sheet 1, drip having spilled out in this manner can be absorbed through the liquid guiding channels 5 under a capillary phenomenon thereof. The drip-absorbent sheet 1 is often not under foodstuff but between layered foodstuffs, for example, when a large quantity of meat is transported. In such cases, drip can be efficiently absorbed through both surfaces of the drip-absorbent sheet 1. With the drip-absorbent sheet of prior art including the liquid-impervious sheet bonded only to the upper surface thereof and sandwiched between upper and lower layers of meat, it has been found that the absorbent layer defined by the underside of the drip-absorbent sheet is kept in close contact with the foodstuff and drip having been absorbed by the drip-absorbent sheet may not only deteriorate freshness of meat but also result in unacceptable loss of weight due to excessive absorption of drip. In contrast, the drip-absorbent sheet 1 according to the present invention is provided with the back-sheet 17 adapted to prevent the drip-absorbent sheet 1 sandwiched between each pair of the adjacent meat layers from absorbing an excessive amount of drip.

The absorbent sheet 2 is a fibrous assembly for absorption and retention of drip. For drip of relatively high water content, the preferred absorbent sheet 2 is a hydrophilic fibrous assembly comprising, for example, air-laid pulp, non-woven fabric containing thermoplastic synthetic fiber and pulp, natural fiber, tissue paper, hydrophobic fiber treated to become hydrophilic, or a mixture thereof. For drip of relatively high fat content, the preferred absorbent sheet 2 is a hydrophobic fibrous assembly comprising, for example, polyolefin or polyester synthetic fiber. Capacity of the absorbent sheet 2 for absorption and retention of drip largely depends on wettability (hydrophilic and hydrophobic characteristics) of the fiber with the drip, and fiber density and thickness of the fibrous assembly. From a practical standpoint, the thickness of the absorbent sheet 2 is limited to several millimeters and therefore the fiber density is correlated with a basis weight of the fibrous assembly. Although not meant to be limiting, the fiber basis weight of the absorbent sheet 2 is usually in a range of 10 to 100g/m².

The thermoplastic sheet 3 is made of thermoplastic resin or film and, as shown by Fig. 2, the sheet 3 is formed with the openings 4 and the liquid guiding channels 5 extending from the peripheral edges 6 of the respective openings 4. The thermoplastic resin used as material for the thermoplastic sheet 3 is not specified and the thermoplastic resin of prior art may be used. For drip of relatively high water content, it is possible to laminate polyvinyl alcohol resin on the drip-absorbent sheet 1 or the surface thereof may be treated to become hydrophilic to make the surface of the drip-absorbent sheet 1 wettable with water and thereby to facilitate water to flow in the openings 4. Alternatively, coloring pigment may be added and to color the drip-absorbent sheet 1 with selected color.

The liquid-guiding channels 5 of the thermoplastic sheet 3 continuously extend from the peripheral edges 6 of the respective openings 4 in the thickness direction of the thermoplastic sheet and each of the liquid guiding channels is tapered from the peripheral edge 6 toward the associated distal end 7. Each of the distal ends is defined by a saw teeth-like edge (See paragraph [0030]) and lengths of individual tooth as measured from the peripheral edge are not uniform. The maximum length L as measured from the peripheral edge 6 of the liquid guiding channel 5 to the associated distal end 7 is larger than 1/2 of the maximum diameter D of the opening 4. It should be noted here that the maximum diameter D of the opening 4 is measured on a surface (referred hereinafter as a flat surface 14) opposed to a surface 13 toward which the liquid guiding channel 5 of the thermoplastic sheet 3 extends. The maximum length L is the maximum length as measured from an intersecting point between a line A extending along a sloping plane of the liquid-guiding channel 5 and a line B extending across the peripheral edge 6 on the flat surface 14 to the remotest point T of the distal end 7.

It should be appreciated that dimensions of the opening 4 and the other construction components can be appropriately selected depending on particular nature of the drip so that a desired opening space percentage may be assured and drip may smoothly flow into the liquid guiding channels 5, preferably under a capillary phenomenon. In the case of the usual drip-absorbent sheet 1, the maximum diameter D of the opening 4 is in a range of 0.2mm or larger to 3.0mm or smaller, an opening diameter at the distal end is in a range of 0.1mm or larger but less than 3.0mm, the maximum length L of the liquid guiding channel 5 is 0.25mm or larger. An opening space percentage of the thermoplastic sheet 3 on the flat surface 14 is in a range of 50 to 95% and an opening space percentage on the surface 13 having the distal ends 7 is in a range of 10 to 50%.

As shown by Fig. 3, both the top-sheet 16 and the back-sheet 17 respectively have the surfaces 13 toward which the liquid guiding channels 5 extend faced to the absorbent sheet 2 and the distal ends 7 of the respective liquid guiding channels 5 are joined to the absorbent sheet 2. Specifically, the liquid guiding channel 5 has its diameter-reduced end kept in contact with the absorbent sheet 2 and such unique arrangement well restricts the amount of drip once having been absorbed from the exterior by the absorbent sheet 2 through the liquid-guiding channel 5 from flowing back and eventually leaking out. By dimensioning the maximum length L of the liquid guiding channel 5 as measured from the peripheral edge 6 to the distal end 7 to be larger than 1/2 of the maximum diameter D of the opening 4, a flow resistance acting on drip flowing through the liquid guiding channel 5 can be enhanced and thereby the preventing effect against back flow and eventual leak out of drip can be correspondingly enhanced.

The distal end 7 of the liquid guiding channel 5 is joined to the absorbent sheet 2 so that the liquid guiding channel 5 may have a columnar cross-sectional shape and thereby define a drip retention space 8 between the thermoplastic sheet 3 and the absorbent sheet 2. Such retention space 8 defined on the bottom surface 12 of the drip-absorbent sheet 1 is adapted to retain the amount of drip having passed through the absorbent sheet 2 without being absorbed thereby. In this way, the drip-absorbent sheet 1 can retain the amount of drip larger than the absorption capacity of the absorbent sheet 2. Even when drip once having been absorbed by the absorbent sheet 2 partially ooze through the top surface 11 of the absorbent sheet 2 due to a load exerted on the absorbent sheet 2 by the intermediary of foodstuff, the retention space 8 formed on the top surface 11 can temporarily retain such amount of drip and thereby restrict undesirable leak out of drip.

To enlarge the volume of the retention space 8, it is preferred to dimension the liquid guiding channel to be relatively long. As has previously been described, the maximum length L as measured from the peripheral edge 6 of the liquid guiding channel 5 to the distal end 7 may be dimensioned to be larger than 1/2 of the maximum diameter D of the opening 4 to enhance the preventive effect against leak of drip and, in addition, to enlarge the volume of the retention space 8.

The drip-absorbent sheet 1 may be formed on the both surfaces thereof with the retention spaces 8 in the manner as has been described above to assure that the drip-absorbent sheet 1 has a sufficient bulkiness and cushioning properties to protect foodstuff from being damaged. In addition, the retention space 8 on the top surface 11 usually contains no drip and is therefore air-permeable in comparison with the sheet including neither the openings 4 nor the liquid guiding channels 5. As a consequence, brown discoloration of meat placed on the drip-absorbent sheet 1 is reliably restricted.

The thermoplastic sheet 3 and the absorbent sheet 2 may be joined to each other by adhesion or thermal fusion. Preferably, hot melt adhesive (not shown) applied in a pattern of stripes, helices or dots each having a width or a diameter smaller than the diameter of the opening 4 to ensure that the distal end 7 is joined to the absorbent sheet 2 without closing the distal end 7 of the liquid guiding channel 5.

Even after the distal ends 7 of the respective liquid guiding channel 5 have been joined to the absorbent sheet 2, each of the distal ends 7 is partially left not joined to the absorbent sheet 2 so as to define a plurality of gaps 15. This is for the reason that the distal end 7 has the sawtooth edge. A partial amount of drip having flowed into the liquid guiding channel 5 through the associated opening 4 on the top surface 11 further flows into the retention space 8 through the gaps 15, spreads over the surface of the absorbent sheet 2, then infiltrates into fiber interstices of the absorbent sheet 2 under capillary phenomenon. In this way, the drip is eventually absorbed and retained by the absorbent sheet 2. It should be appreciated herein that the drip-absorbent sheet 1 includes a plurality of the liquid guiding channels 5 but it is not essential to join the distal ends 7 of all the liquid guiding channels 5 to the absorbent sheet 2.

With the unique configuration of the liquid guiding channel 5 such that the channel 5 is tapered toward the distal end 7 and joined to the absorbent sheet 2 at the distal end 7, the drip-absorbent sheet 1 has a multilayered structure having a cross section like a corrugated board (See Fig. 2). Such unique structure advantageously makes the drip-absorbent sheet 1 resistant to a significant deformation even under a load and thereby prevents the retention space 8 from collapsing. Furthermore, when the drip-absorbent sheet 1 is picked up with the fingers at one end so that the drip-absorbent sheet 1 should be kept horizontal, the drip-absorbent sheet 1 is not apt to sag and this property facilitates operation of laying the drip-absorbent sheet 1 on the tray used to pack various kinds of foodstuff.

As will be apparent from the sectional view of Fig. 3, the openings 4 formed on the top-sheet 16 and the openings 4 formed on the back-sheet 17 of the drip-absorbent sheet 1 do not overlap with each other as viewed in the thickness direction of the drip-absorbent sheet 1. Such offset of the alignments of the openings 4 on top and bottom surfaces effectively restricts drip from passing through the drip-absorbent sheet 1 even if a relatively large amount of drip flows into the drip-absorbent sheet 1. The drip-absorbent sheet 1 in which the openings 4 formed on the top-sheet 16 do not overlap with the openings 4 formed on the back-sheet 17 may be obtained by joining the respective thermoplastic sheets 3 made in separate steps to both surfaces of the absorbent sheet 2 without alignment of the liquid guiding channels 5 on the top-sheet 16 with the liquid guiding channels 5 on the back-sheet 17.

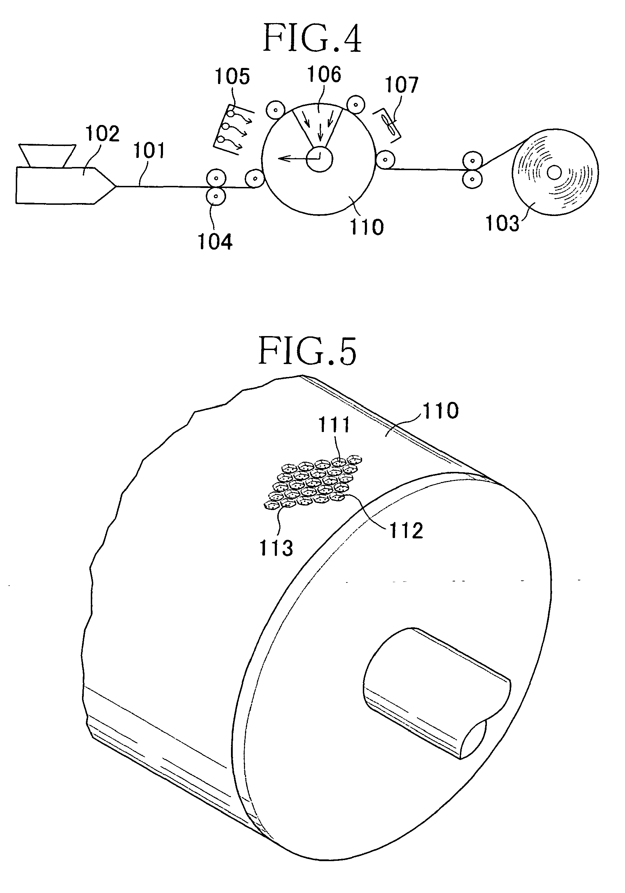

Now a process of making the thermoplastic sheet 3 formed with the openings 4 and the liquid guiding channels 5 will be exemplarily described in reference to Figs. 4 and 5. Fig. 4 is a diagram schematically illustrating a process of forming openings 4 and liquid guiding channels 5 and Fig. 5 is a perspective view of a drum 110 used to form the openings 4 and the liquid guiding channels 5, showing depressions 111 defining the openings 4 and the liquid guiding channels 5 in an enlarged scale.

Referring to Fig. 4, the process proceeds from the left hand to the right hand as viewed in Fig. 4 and uses an extruder 102, a forming drum 110 and a wind-up roll 103 arranged in this order as viewed from the left hand to the right hand. In addition, guide or pressure rolls 104 are arranged at positions requiring them. A thermoplastic resin sheet or film (referred to hereinafter as an original fabric 101) as material for the thermoplastic sheet 3 is fed from the extruder 102 to the forming drum 110 adapted to form the openings 4 and the liquid guiding channels 5 (both not shown).

As shown by Fig. 5, the forming drum 110 includes on its peripheral surface a plurality of the depressions 111 each having a shape corresponding to that of the opening 4 of the thermoplastic sheet 3. A bottom 112 of the depression 111 is formed with a fine through-hole 113 in fluid communication with a vacuum suction system (not shown) of the forming drum 110. Each of the depressions111 of the forming drum 110 is diameter-reduced from the peripheral surface toward a center of the forming drum 110 and these depressions 111 are arranged on the peripheral surface of the forming drum 110 in a sawtooth pattern. The term "sawtooth pattern" used herein includes the case in which a plurality of tooth project or lie in zigzag pattern and, in practice, such arrangement usually becomes irregular when a phenomenon of bursting occurs as will be described later.

Referring again to Fig. 4, the original fabric 101 runs along and in close contact with the peripheral surface of the forming drum 110, under heating to soften the original fabric if desired, and reaches a vacuum suction zone 106 in which the original fabric 101 is sucked and stretched into the depressions 111 until distal ends of these stretched portions burst. Upon bursting, the stretched portions of the original fabric 101 are tubulated so as to form the liquid guiding channels 5. In the process described above, bursting of the distal ends causes the distal ends 7 of the respective liquid guiding channels 5 to have the sawtooth edges as shown by Fig. 2. The original fabric 101 formed with the liquid guiding channels 5 in this manner leaves the forming drum 110 after cooled and taken up on the wind-up roll 103.

A diameter of the opening 4 obtained according to this process substantially depends on a shape of the associated depression 111. A depth of the depression 111 may be adjusted to assure that the maximum height L is larger than 1/2 of the maximum diameter D of the opening 4.

It should be appreciated that the process of making the thermoplastic sheet 3 according to the invention is not limited to the embodiment as has been exemplarily described. For example, it is possible also to form a flat sheet of thermoplastic resin with the opening 4 and the liquid guiding channel 5 both having predetermined shapes, respectively, by a process of vacuum molding or hot press.

Now the drip-absorbent sheet 1 comprising the absorbent sheet 2 and a pair of the thermoplastic sheet 3 respectively joined to the both surfaces of the absorbent sheet 2 will be described in comparison with a comparative sample including the thermoplastic sheet 3 joined to only one side of the absorbent sheet 2. Air-laid pulp having a basis weight of 57g/m² was used for the absorbent sheet 2 and high density polyethylene film formed with the openings 4 each having the maximum diameter D of 0.30mm was used for the thermoplastic sheet 3. Thickness of the polyethylene film before the openings 4 are formed was 0.02mm and a dimension in the thickness direction of the polyethylene film including the liquid guiding channels 5 after the film had been formed with the openings 4 was 0.35mm. An opening space percentage of the openings 4 with respect to the thermoplastic sheet 3 measured on the flat surface 14 was about 80% and the opening space percentage measured on the surface 13 having the distal ends 7 was about 20%. The thermoplastic sheet 3 was joined to the absorbent sheet 2 by spray-coating hot melt adhesive of 3.0g/m².

Two set of *sashimi* (sliced raw fish) of tuna (about 38g) were placed on the top-sheet 16 of the drip-absorbent sheet 1 as well as on the surface of the sample having the thermoplastic sheet 3 had been joined thereto respectively, and filter papers were laid under the drip-absorbent sheet 1 as well as under the sample and then left them at rest in a refrigerator. 24 hours after, leak out of drip on the filter paper was visually checked. As result of the visual check, no leak out of drip was recognized with the drip-absorbent sheet 1 but leak out of drip was recognized with the sample. From this comparative checking, the inventors confirmed a preferred effective of joining the thermoplastic sheets to the both surfaces of the absorbent sheet 2.

As an additional visual comparison, the drip-absorbent sheet 1 was placed on paper towel laid on a tray with the top-sheet 16 up while the sample was placed on another tray with the side of the thermoplastic sheet 3 up and colored saline of 2.0ml was dropped at once onto the top-sheet 16 of the drip-absorbent sheet 1 and onto the thermoplastic sheet 3 of the sample, respectively to determine visually whether any degree of saline seepage into the paper towel had occurred or not. No seepage of the saline into the paper towel was observed for the drip-absorbent sheet 1 while such seepage was visually recognized for the sample. In the case of the drip-absorbent sheet 1, the saline was visually seen through the back-sheet 17. From such result, it was found that the drip-absorbent sheet 1 including the liquid guiding channels 5 reliably restricts undesirable passing through the drip-absorbent sheet 1 and the retention space 8 on the side of the bottom surface 12 reliably serves as the drip retention space.

While the drip-absorbent sheet 1 of the invention has been described on the basis of the particular embodiment, it will be apparent to those skilled in the art that the present invention is not limited to such embodiment but details of the drip-absorbent sheet 1 may be modified in various manners. For example, the thermoplastic sheet 3 may be joined to the absorbent sheet 2 so as to the flat surface 14 thereof opposed to the surface 13 toward which the liquid guiding channels 5 extend defines the top surface 11 and the surface 13 defines the bottom surface 12. When meat is place on the top-sheet 16 of the drip-absorbent sheet 1 according to this alternative embodiment, interposition of the liquid guiding channels 5 assures sufficient air-permeability in contrast with the thermoplastic sheet 3 having no opening to restrict brown discoloration which otherwise would occur on the surface of meat facing the drip-absorbent sheet 1.

It is also possible to differentiate various factors such as a shape and diameter of the opening 4 or an opening space percentage between the top-sheet 16 and the back-sheet 17. In this case, the opening diameter and/or the opening space percentage on the bottom surface 12 may be set to be smaller than those factors on the top surface 11 to enhance the restricting effect against drip's passage through. When the diameter as well as the shape of the opening 4 or the opening space percentage is differentiated between the top-sheet 16 and the back-sheet 17 of the drip-absorbent sheet 1 in the manner as has been described above, the top-sheet 16 and the back-sheet 17 may be discriminated one from another on the basis of external appearance or touch. Alternatively it is possible to provide the top-sheet 16 and the back-sheet 17 with different colorations or patterns to make the discrimination further easier. Obviously, both the top- and back-sheets 16, 17 may be used without any distinction so far as they are same in shape as well as in size.

From the viewpoint of aptitude for extrusion molding, low density polyethylene having a density in a range of 0.910 to 0.925g/cm³, preferably in a range of 0.916 to 0.920g/cm³, high density polyethylene having a density of 0.930 to 0.965g/cm³, preferably in a range of 0.940 to 0.965g/cm³, or ethylene copolymer such as EVA or ethylene-acrylic acid ester copolymer, or polyethylene-based synthetic resin such as ultralow density polyethylene may be used independently or in the form of mixture thereof to form the thermoplastic sheet 3. Particularly, the polyethylene-based synthetic resin containing the high density polyethylene may be used for this purpose to obtain the liquid guiding channels 5 of sufficiently high stiffness to restrict the retention space 8 from collapsing under a load exerted on the drip-absorbent sheet 1.

Alternatively, the thermoplastic resin containing at least 30% or higher by mass of highly transparent resin such as low density polyethylene having a density in a range of 0. 901 to 0.925g/cm³, preferably in a range of 0.916 to 0.920g/cm³ or ethylene copolymer such as EVA and 70% or lower by mass of high density polyethylene may be used to form the thermoplastic sheet 3 without addition of any coloring pigment so that the thermoplastic sheet 3 may exhibit together with the absorbent sheet 2 a total light transmittance of 70% or higher. In this way, the light transmittance of the thermoplastic sheet 3 is improved and thereby the presence of the drip-absorbent sheet 1 underlying foodstuff can be effectively obscured. In addition to this, rayon fiber or polypropylene fiber having a relatively high transparency may be used as component fibers of the absorbent sheet 2 to obscure the presence of the drip-absorbent sheet 1 further effectively. It should be noted here that the total light transmittance was measured using test pieces (n = 10) each having a width of 50mm and a length of 40mm in accordance with JIS K7105 A by Flicker Photometric Colorimeter Z-300A manufactured by Nippon Denshoku Industries Co., Ltd.

## Claims

1. A drip-absorbent sheet comprising:
an absorbent sheet(2);
a pair of thermoplastic sheets(3) joined to both surfaces of said absorbent sheet (2) and defining top and bottom surfaces(11,12) of said drip-absorbent sheet, respectively, wherein said drip-absorbent sheet is adapted to be loaded with foodstuff onto said top surface (11);
said thermoplastic sheets (3) being formed with a plurality of openings(4)spaced one from another;
liquid guiding channels(5) continuously extending from peripheral edges of respective said openings (4) in a thickness direction of said thermoplastic sheets (3) wherein each of said liquid guiding channels (5) is diameter-reduced gradually as it extends toward a distal end(7) thereof; and
said thermoplastic sheets (3) respectively face said top and bottom surfaces (11, 12) of said absorbent sheet (2) toward which said liquid guiding channels(5) extend; said drip-absorbent sheet being **characterized in that**:
said distal ends (7) of said liquid guiding channels (5) are respectively defined by saw teeth-like edges and joined to said absorbent sheet (2);
said liquid guiding channels (5) have drip retention spaces(8)defined between said thermoplastic sheets (3) and said drip-absorbent sheet;
gaps (15)are defined between said distal ends (7) of said liquid guiding channels (5) and said top and bottom surfaces (11,12) of said absorbent sheet (2);
said openings (4) formed in said thermoplastic sheet (3) defining said top surface (11) do not overlap with said openings (4) formed in said thermoplastic sheet (3) defining said bottom surface (12) as viewed in the thickness direction of said drip-absorbent sheet; and
the maximum length (L) measured from said peripheral edge of said opening (4) to said distal end (7) of said liquid guiding channel (5) is larger than 1/2 of the maximum diameter (D) of said opening (4).

2. The drip-absorbent sheet according to Claim 1, wherein said thermoplastic sheets (3) include 20 or more of said openings (4) per 1cm².

3. The drip-absorbent sheet according to Claim 1 or 2, wherein said thermoplastic sheets (3) are made of polyethylene-based thermoplastic resin.

4. The drip-absorbent sheet according to Claim 3, wherein said thermoplastic sheets (3) are made of polyethylene-based thermoplastic resin containing 30% or higher by mass of at least one of low density polyethylene and ethylene copolymer and 70% or lower by mass of high density polyethylene.

5. The drip-absorbent sheet according to any preceding Claim, wherein said thermoplastic sheets (3) are not colored and exhibit a total light transmittance of 70% or higher as measured together with said absorbent sheet (2).

## Patentansprüche

1. Tropfenabsorbierendes Flächengebilde, umfassend:
ein absorbierendes Flächengebilde (2);
ein Paar thermoplastischer Flächengebilde (3), die mit beiden Oberflächen des absorbierenden Flächengebildes (2) zusammengefügt sind und eine obere bzw. eine untere Oberfläche (11, 12) des tropfenabsorbierenden Flächengebildes definieren, wobei das tropfenabsorbierende Flächengebilde dazu ausgelegt ist, auf der oberen Oberfläche (11) mit einem Lebensmittel belegt zu werden;
wobei die thermoplastischen Flächengebilde (3) mit einer Mehrzahl von Öffnungen (4) ausgebildet sind, die voneinander beabstandet sind;
wobei sich Flüssigkeits-Führungskanäle (5) durchgehend von umlaufenden Rändern von Entsprechenden der Öffnungen (4) in einer Dickenrichtung der thermoplastischen Flächengebilde (3) erstrecken, wobei jeder der Flüssigkeits-Führungskanäle (5) mit einer Erstreckung zu seinem distalen Ende (7) hin einen sich allmählich verringernden Durchmesser hat; und
die thermoplastischen Flächengebilde (3) auf die obere bzw. die untere Oberfläche (11,12) des absorbierenden Flächengebildes (2) zeigen, auf die zu sich die Flüssigkeits-Führungskanäle (5) erstrecken; wobei das tropfenabsorbierende Flächengebilde **dadurch gekennzeichnet ist, dass**:
die distalen Enden (7) der Flüssigkeits-Führungskanäle (5) jeweils durch sägezahnartige Ränder definiert sind und mit dem absorbierenden Flächengebilde (2) zusammengefügt sind;
wobei die Flüssigkeits-Führungskanäle (5) Tropfenrückhalteräume (8) haben, die zwischen den thermoplastischen Flächengebilden (3) und dem tropfenabsorbierenden Flächengebilde ausgebildet sind;
zwischen den distalen Enden (7) der Flüssigkeits-Führungskanäle (5) und der oberen und der unteren Oberfläche (11, 12) des absorbierenden Flächengebildes (2) Zwischenräume (15) definiert sind;
die Öffnungen (4), die in dem thermoplastischen Flächengebilde (3) ausgebildet sind, das die obere Oberfläche (11) definiert, sich in der Dickenrichtung des tropfenabsorbierenden Flächengebildes gesehen nicht mit den Öffnungen (4) überlappen, die in dem thermoplastischen Flächengebilde ausgebildet sind, das die untere Oberfläche (12) definiert; und
die maximale Länge (L) von dem umlaufenden Rand der Öffnung (4) zu dem distalen Ende (7) des Flüssigkeits-Führungskanals (5) gemessen länger als die Hälfte des maximalen Durchmessers (D) der Öffnung (4) ist.

2. Tropfenabsorbierendes Flächengebilde gemäß Anspruch 1, wobei die thermoplastischen Flächengebilde (3) 20 oder mehr der Öffnungen (4) pro Quadratzentimeter aufweisen.

3. Tropfenabsorbierendes Flächengebilde gemäß Anspruch 1 oder 2, wobei die thermoplastischen Flächengebilde (3) aus einem auf Polyethylen basierten thermoplastischen Kunstharz hergestellt sind.

4. Tropfenabsorbierendes Flächengebilde gemäß Anspruch 3, wobei die thermoplastischen Flächengebilde (3) aus einem auf Polyethylen basierten thermoplastischen Kunstharz hergestellt sind, das 30 Masseprozent oder mehr mindestens eines Polyethylens niedriger Dichte und EthylenCopolymers und 70 Masseprozent oder weniger eines Polyethylens hoher Dichte enthält.

5. Tropfenabsorbierendes Flächengebilde gemäß einem der vorhergehenden Ansprüche, wobei die thermoplastischen Flächengebilde (3) nicht farbig sind und zusammen mit dem absorbierenden Flächengebilde (2) gemessen eine Gesamt-Lichtdurchlässigkeit von 70% oder mehr aufweisen.

## Revendications

1. Feuille d'absorption de gouttes qui comprend :
une feuille absorbante (2) ;
une paire de feuilles thermoplastiques (3) jointes aux deux surfaces de ladite feuille absorbante (2) et qui définissent les surfaces supérieure et inférieure (11, 12) de ladite feuille d'absorption de gouttes, respectivement, ladite feuille d'absorption de gouttes étant adaptée pour être chargée avec des aliments sur ladite surface supérieure (11) ;
lesdites feuilles thermoplastique (3) étant formées avec une pluralité d'ouvertures (4) espacées les unes des autres ;
des canaux de guidage de liquide (5) qui s'étendent en continu depuis les bords périphériques desdites ouvertures respectives (4) dans la direction d'épaisseur desdites feuilles thermoplastiques (3), le diamètre de chacun desdits canaux de guidage de liquide (5) étant progressivement réduit au fur et à mesure qu'il s'étend vers une extrémité distale (7) de ceux-ci ; et
lesdites feuilles thermoplastiques (3) faisant respectivement face auxdites surfaces supérieure et inférieure (11, 12) de ladite feuille absorbante (2) vers lesquelles s'étendent lesdits canaux de guidage de liquide (5) ; ladite feuille d'absorption de gouttes étant **caractérisée en ce que** :
lesdites extrémités distales (7) desdits canaux de guidage de liquide (5) sont respectivement définies par des bords en dents de scie et jointes à ladite feuille absorbante (2) ;
lesdits canaux de guidage de liquide (5) possèdent des espaces de rétention des gouttes (8) définis entre lesdites feuilles thermoplastiques (3) et ladite feuille d'absorption de gouttes ;
des espaces (15) sont définis entre lesdites extrémités distales (7) desdits canaux de guidage de liquide (5) et lesdites surfaces supérieure et inférieure (11, 12) de ladite feuille absorbante (2) ;
lesdites ouvertures (4) formées dans ladite feuille thermoplastique (3) définissant ladite surface supérieure (11) ne chevauchent pas lesdites ouvertures (4) formées dans ladite feuille thermoplastique (3) définissant ladite surface inférieure (12) lorsque l'on regarde dans la direction d'épaisseur de ladite feuille d'absorption de gouttes ; et
la longueur maximale (L) mesurée entre ledit bord périphérique de ladite ouverture (4) et ladite extrémité distale (7) dudit canal de guidage de liquide (5) est supérieure à la moitié du diamètre maximal (D) de ladite ouverture (4).

2. Feuille d'absorption de gouttes selon la revendication 1, dans laquelle lesdites feuilles thermoplastiques (3) comprennent 20 ouvertures (4) ou plus par cm².

3. Feuille d'absorption de gouttes selon la revendication 1 ou 2, dans laquelle lesdites feuilles thermoplastiques (3) sont composées de résine thermoplastique à base de polyéthylène.

4. Feuille d'absorption de gouttes selon la revendication 3, dans laquelle lesdites feuilles thermoplastiques (3) sont composées de résine thermoplastique à base de polyéthylène qui contient 30 % en masse ou plus d'au moins l'un de polyéthylène et de copolymère d'éthylène à faible densité et 70 % en masse ou moins de polyéthylène à forte densité.

5. Feuille d'absorption de gouttes selon l'une quelconque des revendications précédentes, dans laquelle lesdites feuilles thermoplastiques (3) ne sont pas colorées et présentent une transmission de lumière totale de 70 % ou plus, mesurée avec ladite feuille absorbante (2).
